# EUROPÄISCHE PATENTANMELDUNG

(11) **EP 2 433 919 A1**
(43) Veröffentlichungstag der Anmeldung: **28.03.2012**
(21) Anmeldenummer: 11182046.0
(22) Anmeldetag: 20.09.2011
(51) Int. Cl.: C04B 28/26

(54) **Härterzusammensetzung**

(30) Priorität: 24.09.2010 DE 102010041386
(71) Anmelder: Chemische Fabrik Budenheim KG, 55257 Budenheim (DE)
(72) Erfinder: Krebs, Melanie, 56288 Braunshorn (DE); Schmidt, Erwin, 55262 Heidesheim (DE); Leister, Michael, 55218 Ingelheim (DE); Lippold, Kirstin, 55268 Nieder-Olm (DE)
(74) Vertreter: WSL Patentanwälte Partnerschaftsgesellschaft

(57) **Zusammenfassung**

Härterzusammensetzung zur Steuerung des Abbindeverhaltens eines Alkalisilikatbindemittels, dadurch gekennzeichnet, dass die Härterzusammensetzung bezogen auf die trockenen Feststoffe wenigstens folgende Bestandteile umfasst:
a) 50 bis 97 Gew.-% polymeres Aluminiumphosphat [Al(PO₃)₃]ₙ mit einem Molverhältnis von P / Al von 2,0 bis 3,5,
b) 3 bis 50 Gew.-% wenigstens eines Zusatzstoffs, ausgewählt unter Zinkoxid (ZnO), Zinnoxid (SnO₂), Zinnchlorid (SnCl₂), Eisen (III)-orthophosphat (FePO₄), Eisen (III)-pyrophosphat (Fe₄(P₂O₇)₃), Borphosphat (BPO₄), Calciumsulfoaluminat ((Ca₆Al₂[(OH)₁₂|(SO₄)₃]·26 H₂O), Calciumhydrogenphosphat (CaHPO₄), Calciumsilikat (Ca SiO₃) oder Gemischen der vorgenannten Zusatzstoffe.

## Beschreibung

Die Erfindung betrifft eine Härterzusammensetzung zur Steuerung des Abbindeverhaltens eines Alkalisilikatbindemittels sowie eine Kombination aus dem Alkalisilikatbindemittel und der Härterzusammensetzung.

### Hintergrund der Erfindung

Für die Bindung von körnigem Material und Pigmenten auf Oberflächen kommen je nach Einsatzgebiet und den zu verbindenden Materialien unterschiedlichste Bindemittel zum Einsatz.

Organische Bindemittel haben den Vorteil, dass sie bei Raumtemperatur oder vergleichsweise niedrigen Temperaturen abbinden, so dass temperaturempfindliche Materialien, wie beispielsweise bestimmt Pigmente, beim Abbinden keinen Schaden nehmen. Allerdings besitzen solche organischen Bindemittel häufig eine schlechte UV-Beständigkeit, weshalb sie für einen dauerhaften Einsatz im Freien nur bedingt einsetzbar sind oder aufwändig gegen UV-Strahlung geschützt werden müssen, was diese ohnehin in der Regel teuren Bindemittelsysteme für viele Anwendungen unwirtschaftlich macht.

Eine weitere Gruppe von Bindemitteln bilden anorganische Phosphate, wie Monoaluminiumphosphat, Monomagnesiumphosphat oder Monozinkphosphat. Mit diesen Phosphatbindemitteln können ebenfalls viele Pigmente und körnige Materialien auf Oberflächen gebunden werden. Die zur Abbindung benötigten Temperaturen liegen jedoch bei etwa 250 bis 350 °C und damit deut lich oberhalb der organischer Bindemittelsysteme. Temperaturempfindliche Materialien, wie bestimmte Pigmente, lassen sich mit solchen Bindemitteln oft nicht verarbeiten, ohne dass die Materialien zerstört oder unerwünscht verändert werden. Zudem weisen diese Bindemittel üblicherweise niedrige pH-Werte kleiner als 3 auf und sind daher für säureempfindliche Materialien nicht geeignet. Darüber hinaus sind auch solche reinen Phosphatsysteme oft nicht ausreichend stabil gegenüber UV-Strahlung und müssten für den Einsatz im Freien daher aufwändig geschützt werden. Durch eine nicht völlig zu verhindernde ständige Abgabe von Phosphaten bieten sie zudem Algen, Flechten und Moosen gute Wachstumsbedingungen, was insbesondere in der Außenanwendung in der Regel nicht erwünscht ist.

Ein weiteres sehr gut geeignetes Mittel zur Bindung von körnigem Material und Pigmenten auf Oberflächen stellen Gläser, Glasuren und Emails dar. Diese müssen jedoch üblicherweise bei hohen Temperaturen oberhalb ihres jeweiligen Transformationspunktes mit den zu bindenden körnigen Materialien oder Pigmenten getempert werden. Die Schichtdicke der Matrix solcher Bindemittel ist für viele Anwendungen zu groß, weshalb diese Art der Bindung für viele Einsatzzwecke ungeeignet ist.

Eine weitere Gruppe bekannter Bindemittel stellen wasserlösliche Alkalisilikate dar, die in Deutschland auch als Wassergläser, Festgläser oder Flüssiggläser bezeichnet werden. Zum Einsatz kommen üblicherweise Natrium- und Kaliumsilikate. Sie werden beispielsweise als Bindemittel in Kitten, Mörteln und Putzen oder auch als Kleber für Papier und Pappe eingesetzt und sogar für die Stabilisierung und Verfestigung von Böden. Das Aushärten und Abbinden der Alkalisilikate kann dabei auf unterschiedliche Art und Weise erfolgen und der jeweiligen Anwendung angepasst werden.

So genügt beispielsweise für bestimmte Silikat- und Mineralfarben auch im Außenbereich das in der Umgebungsluft vorhandene Kohlendioxid für die Aushärtungsreaktion, wobei man das enthaltene Wasser einfach verdunsten lässt. Die Abbindezeit solcher Systeme ist jedoch vergleichsweise lang. Zudem müssen die Untergründe silikatisch sein, um eine ausreichende Haftung zu gewährleisten. Als Wassergläser können auch nur die gegenüber den Natriumwassergläsern teureren Kaliumwassergläser verwendet werden. Die Wasserbeständigkeit dieser Bindemittelsysteme ist vergleichsweise gut, jedoch sind sie nicht ausreichend beständig gegen eine dauerhafte Bewitterung, wie sie z.B. auf Dächern und an ungeschützten Wänden vorherrscht.

Für Anwendungen, die eine höhere Beständigkeit gegenüber Bewitterung und eine hohe Wasserbeständigkeit erfordern, wird das Abbinden, d.h. das Entfernen des Wassers und das Ausfällen der gelösten Silikatmatrix wie bei Gläsern und Glasuren durch Tempern bei Temperaturen nahe an oder oberhalb der Transformationstemperatur vorgenommen. Diese liegen je nach Art und Zusammensetzung des Alkalisilikates bei etwa 450 bis 550°C. Ein Natriumdisilikat hat beispielsweise eine Transformationstemperatur von etwa 460°C. Die Wasserbeständigkeit und Bewitterungsfestigkeit wird entweder durch die Reaktion des Bindemittels mit den Oberflächen der zu bindenden Materialien erreicht, oder aus der Oberfläche des gebundenen Systems werden mittels eines anschließenden Ätz- und Auswaschungsprozesses die Alkaliionen ausgelaugt. Für das Erreichen einer gewünschten Wasserbeständigkeit und Bewitterungsfestigkeit der Bindung müssen daher aufwendige, umweltbelastende und energieintensive Verfahren angewendet werden. Zudem ist man gerade bei der Auswahl von zu bindenden Pigmenten stark eingeschränkt, da viele organische und auch anorganische Pigmente bei Temperaturen oberhalb von 350°C ihre Farbe durch die Reaktion mit dem Luftsauerstoff verändern oder anderen Schaden nehmen.

Es sind Härter für Alkalisilikate bekannt, mit denen sich die Abbindezeit steuern und die für das Abbinden erforderliche Temperatur gegenüber den zuvor beschriebenen hohen Temperaturen erheblich herabsetzen lässt. Zum Einsatz kommen hier üblicherweise Kohlendioxid, Silikofluoride, Kohlensäureester, Glycolide, aber auch verschiedene Metallphosphate. Beispielsweise sind polymere Aluminiumphosphate in der Literatur als Härter für Alkalisilikate bekannt. Solche Härter können auch die Wasserbeständigkeit und Säurefestigkeit sowie mechanische Eigenschaften verbessern.

Die EP-A-1 241 131 beschreibt die Verwendung von polymeren Aluminiumphosphaten als Härter in Putzformulierungen. Die DE-A-10 2007 038 403 beschreibt eine Trockenmischung zur Herstellung eines Mörtels, welche Flugasche, Metallsilikat und Phosphat oder Polyphosphat, beispielsweise polymeres Aluminiumphosphat, als Härter enthält. Die EP-A-0 554 757 beschreibt eine Einkomponenten-Alkalisilikat-Zementzusammensetzung, die polymeres Aluminiumphosphat, weitere anorganische Phosphate, Quarzsand, Ton, Kieselgur, Mineralöl und festes Natrium- oder Kaliumwasserglas enthält. Die EP-A-0 615 953 beschreibt den Einsatz von Aluminiumphosphat zum Härten von Bindern für keramische Bauteile. Allen diesen Anwendungen von Härtern ist gemein, dass das Abbinden und die Härtungsreaktion bei Raumtemperatur abläuft. Um das zu erreichen, ist es notwendig, die Reaktivität des Härters so einzustellen, dass diese bereits bei Raumtemperatur ausreichend hoch ist. Die Verarbeitungszeit der Mischungen ist dann jedoch entsprechend kurz. Des Weiteren ist es bei diesen Ansätzen erforderlich, möglichst reaktive, üblicherweise hoch alkalische Wassergläser zu verwenden, die in der Lage sind bereits bei Raumtemperatur mit den jeweiligen Härtern zu reagieren. Diese notwendigen Einschränkungen haben jedoch den Nachteil zur Folge, dass die Zeit bis zum Erreichen einer zufriedenstellenden Wasserbeständigkeit und Säurefestigkeit sehr lang ist und im Zeitraum von Tagen bis Wochen liegt. Die erreichbare Wasserbeständigkeit und Säurefestigkeit ist zwar gut, jedoch für den Einsatz in Bereichen, die sehr stark der Feuchtigkeit ausgesetzt sind, wie im Dach- oder Außenwandbereich, nicht ausreichend.

### Aufgabe

Die Aufgabe der Erfindung bestand daher darin, einen Härter für Alkalisilikate bzw. Wassergläser als Bindemittel bereitzustellen, mit dem man die Vorteile einer silikatischen Bindermatrix hinsichtlich UV-Beständigkeit, Witterungs- und Wasserbeständigkeit und Säurefestigkeit erreicht und der einfach, sicher, wirtschaftlich und bei niedrigen Temperaturen anwendbar ist, insbesondere für das Binden von körnigen Materialien und Pigmenten auf mineralischen, glasigen oder metallischen Untergründen.

### Beschreibung der Erfindung

Die erfindungsgemäße Aufgabe wird gelöst durch eine Härterzusammensetzung zur Steuerung des Abbindeverhaltens eines Alkalisilikatbindemittels, wobei die Härterzusammensetzung bezogen auf die trockenen Feststoffe wenigstens folgende Bestandteile umfasst:
a) 50 bis 97 Gew.-% polymeres Aluminiumphosphat [AI(PO₃)₃]ₙ mit einem Molverhältnis von P/AI von 2,0 bis 3,5,
b) 3 bis 50 Gew.-% wenigstens eines Zusatzstoffs, ausgewählt unter Zinkoxid (ZnO), Zinnoxid (SnO₂), Zinnchlorid (SnCl₂), Eisen (III)-orthophosphat (FePO₄), Eisen (III)-pyrophosphat (Fe₄(P₂O₇)₃), Borphosphat (BPO₄), Calciumsulfoaluminat ((Ca₆Al₂[(OH)₁₂|(SO₄)₃]·26 H₂O), Calciumhydrogenphosphat (CaHPO₄), Calciumsilikat (Ca SiO₃) oder Gemischen der vorgenannten Zusatzstoffe.

Die 3 bis 50 Gew.-% wenigstens eines Zusatzstoffs beziehen sich auf den Gesamtgehalt der eingesetzten Zusatzstoffe und nicht auf den Gehalt jedes einzelnen Zusatzstoffes.

Mit der erfindungsgemäßen Härterzusammensetzung in Verbindung mit einem Alkalisilikatbindemittel (Wasserglas) und körnigen Materialien oder Pigmenten und gegebenenfalls weiteren Hilfsstoffen erzielt man überraschenderweise je nach Alkaliion im Bindemittel, Alkalisilikatkonzentration, Modul des Alkalisilikates und Zusatzstoffen bereits bei Temperaturen von 120 bis 350°C Bindungsfestigkeiten und Witterungsbeständigkeiten, die sonst nur bei Temperaturen deutlich oberhalb des Transformationspunktes des jeweiligen Alkalisilikates, d.h. über 500°C erreicht werden. Die jeweilige Endfestigkeit und Endwasserbeständigkeit wird bereits nach dem ersten Temperschritt erreicht. Ein weiterer nachträglicher Ätz- und Waschprozess der die Alkaliionenkonzentration in der silikatischen Oberfläche absenkt, um die Festigkeit und Wasserbeständigkeit zu verbessern, ist nicht notwendig.

Es wurde überraschend gefunden, dass die erfindungsgemäße Härterzusammensetzung durch Aufnahme der Zusatzstoffe zu dem polymeren Aluminiumphosphat eine gegenüber dem Stand der Technik erhöhte Reaktivität gegenüber den zu härtenden Alkalisilikaten aufweist und/oder eine Erhöhung der Witterungs- und Wasserbeständigkeit sowie der Säurefestigkeit des ausgehärteten Alkalisilikatbindemittels gegenüber dem Stand der Technik zur Folge hat. Dadurch kann entweder bei gegenüber dem Stand der Technik gleichen oder sogar moderat abgesenkten Härtungstemperaturen eine deutlich erhöhte Witterungs- und Wasserbeständigkeit sowie Säurefestigkeit erzielt oder eine mit dem Stand der Technik vergleichbare Witterungs- und Wasserbeständigkeit sowie Säurefestigkeit auch bei deutlich abgesenkten Härtungstemperaturen erzielt werden. Diese primäre Eigenschaft ist zunächst bei allen erfindungsgemäßen Zusatzstoffen gleichermaßen vorhanden, da im silikatischen Bindemittel immer einbindige und damit nicht vernetzende Alkalikationen gegen zweibindige (Ca²⁺, Zn²⁺ oder Sn²⁺), dreibindige (Fe³⁺, Al³⁺, B³⁺) oder gar vierbindige (Sn⁴⁺, Si⁴⁺) Kationen ausgetauscht werden. Geeignete Kombinationen der einzelnen im Austausch gegen Alkaliionen in das silikatische Bindemittel eingeführten Kationen können die positive Wirkung auf die Witterungs- und Wasserbeständigkeit sowie die Säurefestigkeit verstärken.

Die Reaktivität der Zusatzstoffe wird primär durch das jeweilige Anion und dessen Reaktion mit dem zu härtenden Alkalisilikat bestimmt. Längerkettige Phosphate sind gegenüber Alkalisilikaten reaktiver als kurzkettige Phosphate, schnell lösliche Salze, wie Sulfate oder Chloride, reagieren sehr viel schneller als Silikate oder Oxide. Durch geeignete Kombinationen der einzelnen unterschiedlichen Zusatzstoffe kann die Gesamtreaktivität des Härters so eingestellt werden, dass eine schnelle Umsetzung bereits bei möglichst geringen Temperaturen erfolgt, andererseits aber auch die Austauschreaktionen nicht zu schnell und dadurch lediglich lokal begrenzt ablaufen und es so zu Inhomogenitäten im Bindervolumen kommen kann.

In einer Ausführungsform der erfindungsgemäßen Härterzusammensetzung ist der wenigstens eine Zusatzstoff in einer Menge von 3 bis 30 Gew.-% enthalten. Eine sehr hohe Konzentration bestimmter Zusatzstoffe würde die Reaktionsgeschwindigkeit des Härters zwar stark erhöhen, jedoch würde das zu starken Inhomogenitäten der Zusammensetzungen im ausgehärteten Binder führen und letztlich die Witterungs- und Wasserbeständigkeit sowie die Säurefestigkeit des Gesamtsystems verschlechtern. Bei einer zu geringen Konzentration der Zusatzstoffe ist deren Wirkung nicht mehr in ausreichendem Maße feststellbar. Vorzugsweise ist der wenigstens eine Zusatzstoff in einer Menge von 5 bis 20 Gew.% enthalten.

In einer weiteren Ausführungsform der erfindungsgemäßen Härterzusammensetzung weist das polymere Aluminiumphosphat [Al(PO₃)₃]ₙ ein Molverhältnis von P / Al von 2,5 bis 3,4 auf. Vorzugsweise weist das polymere Aluminiumphosphat [Al(PO₃)₃]ₙ ein Molverhältnis von P / Al von > 2,8 bis 3,2 auf. Ein zu niedriges Molverhältnis von P / Al hat den Nachteil, dass die Reaktivität des Phosphates für viele Alkalisilikate zu gering ist und damit die Tempertemperaturen nicht in ausreichendem Maße abgesenkt werden können. Ein zu hohes Molverhältnis von P / Al hat den Nachteil, dass die Reaktivität des Phosphates für viele Alkalisilikate zu hoch wäre und damit eine homogene steuerbare Reaktion über das gesamte Reaktionsvolumen nicht mehr gewährleistet wäre.

In einer weiteren Ausführungsform der erfindungsgemäßen Härterzusammensetzung weist die Zusammensetzung eine mittlere Korngröße d50 im Bereich von 1 bis 120 µm, vorzugsweise im Bereich von 10 bis 50 µm auf. Der Vorteil einer mittleren Korngröße in diesem Bereich ist eine optimale Reaktionskontrolle. Analog zur Phosphatkettenlänge oder den anderen Anionen steuern auch die Korngröße und die Korngrößenverteilung der Härterzusammensetzung die Reaktivität. Zu große Körner verlangsamen den Reaktionsprozess und führen zu inhomogener Verteilung der die Eigenschaften verbessernden Kationen. Sehr kleine Körner wären zwar eigentlich wünschenswert, da sie die Reaktivität erhöhen und die homogene Verteilung der die Eigenschaften verbessernden Kationen verbessern, jedoch ist deren Herstellung unverhältnismäßig aufwändig und teuer und die Lagerfähigkeit der Härterzusammensetzung würde verschlechtert.

Um eine Beschichtung von Oberflächen eines aus vielen Einzelteilchen bestehenden anorganischen Materials, wie beispielsweise Granulat, Sand, Split, Glaskugeln, Glasfritten oder Glassplitter, Metallkugeln etc., herzustellen, mischt man die Härterzusammensetzung zweckmäßigerweise direkt mit dem zu beschichtenden körnigen anorganischen Material und gibt anschließend eine Suspension aus der zu härtenden Alkalisilikatiösung und den zu bindenden gegebenenfalls funktionalen Teilchen oder Pigmenten hinzu. Alternativ wird die Härtermischung gemeinsam mit den zu bindenden gegebenenfalls funktionalen Teilchen oder Pigmenten in der Alkalisilikatlösung suspendiert. Anschließend wird die Suspension über geeignete Auftragsmethoden, wie beispielsweise Drucken, Pinseln, Spritzen, auf die zu beschichtende Oberfläche aufgebracht.

Die Erfindung umfasst auch eine Kombination aus einem Alkalisilikatbindemittel und einer erfindungsgemäßen Härterzusammensetzung. Bevorzugt ist das Alkalisilikatbindemittel Wasserglas, besonders bevorzugt Natriumwasserglas und/oder Kaliumwasserglas.

In einer bevorzugten Ausführungsform der erfindungsgemäßen Kombination liegt das Alkalisilikatbindemittel in flüssiger Form vor und weist einen Feststoffgehalt im Bereich von 15 bis 65 Gew.-% auf. Ein zu hoher Feststoffgehalt hätte den Nachteil, dass die Alkalisilikatlösung instabil und zum Ausfallen/Gelieren neigen würde. Zudem wäre die Viskosität für das gleichmäßige Auf tragen der Suspension zu hoch. Ein zu geringer Feststoffgehalt hätte den Nachteil, dass die Binde- und Klebefähigkeit der Alkalisilikatlösung durch den hohen Wassergehalt eingeschränkt wäre und eine hohe Schrumpfung während des Trocknungsprozesses auftreten würde. Die Witterungs-, Wasser- und Säurebeständigkeit wäre sehr eingeschränkt. Vorzugsweise weist die erfindungsgemäße Kombination einen Feststoffgehalt im Bereich von 20 bis 60 Gew.-% auf, besonders bevorzugt im Bereich von 30 bis 50 Gew.-%.

In einer weiteren bevorzugten Ausführungsform der erfindungsgemäßen Kombination weist das Alkalisilikatbindemittel ein Modul (SiO₂ / M₂O; M = Alkalimetall) von 1,5 bis 4,0, vorzugsweise von 1,8 bis 3,7, besonders bevorzugt von 2,0 bis 3,5 auf, Durch Verwendung eines Alkalisilikatbindemittels mit einem Modul im vorgenannten Bereich lässt sich das Bindevermögen des Alkalisilikatbindemittels verbessern. Mit zunehmendem Modul des Alkalisilikates muss bei gleicher Temperzeit und Tempertemperatur die Reaktivität der Härterzusammensetzung erhöht werden, um gleiche Festigkeit und Wasserbeständigkeit des ausgehärteten Produkts zu erzielen. Dies gilt auch bei einem Wechsel von Kalium- zu Natriumsilikat. Gleichzeitig soll aber die Reaktivität der Härterzusammensetzung nicht zu hoch sein, da sonst aufgrund lokal sehr schnell ablaufender Reaktionen die Festigkeitsentwicklung und Wasserbeständigkeit über das Volumen inhomogen werden und letztlich die Gesamtfestigkeit und Wasserbeständigkeit abnehmen. Durch die Auswahl des Moduls können somit die Gesamtfestigkeit und die Wasserbeständigkeit des ausgehärteten Produkts optimal eingestellt werden.

Die Erfindung betrifft auch die Verwendung der hierin beschriebenen Kombination aus einem Alkalisilikatbindemittel und einer Härterzusammensetzung zur Herstellung von gefärbtem oder pigmentiertem körnigem anorganischen Material, wie Sand, Glas, Keramik, Granulat oder Split, bei dem man Farbstoff oder Pigment mit der Kombination aus Alkalisilikatbindemittel und Härterzusammensetzung an die Oberfläche des körnigen anorganischen Materials bindet.

In einem weiteren Aspekt betrifft die Erfindung auch die Verwendung der hierin beschriebenen Kombination aus einem Alkalisilikatbindemittel und einer Härterzusammensetzung als Haftmittel oder Klebstoff zum Verbinden von Substratoberflächen miteinander oder zum Anbinden eines körnigen Materials, wie Sand, Granulat oder Split, an die Oberfläche eines Substrats.

Bislang wurde Wasserglas als Bindemittel in sehr niedrig viskosen Anwendungen eingesetzt mit geringen Schichtdicken, wie in Farben und Lacken. Eine Kombination mit polymeren Aluminiumphosphaten war aus Gründen der Reaktivitätssteuerung bisher nicht möglich. In Baustoffen, wie Mörteln, Kitten und Putzen mit sehr viel festem Füllstoff wurde auch bisher bereits eine Kombination aus polymeren Aluminiumphosphaten und Alkalisilikaten eingesetzt. Aufgrund der höheren Viskositäten und der vergleichsweise langen Reaktions- und Aushärtezeiten ist hier die Reaktionssteuerung möglich.

Eine Verwendung der Kombination von polymeren Aluminiumphosphaten und Alkalisilikaten als Binder oder Klebstoff oder zur Herstellung von beschichteten Oberflächen, wie beispielsweise gefärbtem oder funktionalisiertem Sand, Granulat, Glas, Metall oder Split ist bislang nicht in Betracht gezogen worden.

Diese Möglichkeit bietet sich erst durch die Modifikation der als Härter fungierenden polymeren Aluminiumphosphate mit reaktivitätssteuerenden und eigenschaftsbeeinflussenden Zusätzen, die Reaktivitäts- und Aushärtezeiten im für die Beschichtungsprozesse möglichen Viskositäts- und Temperaturfenster ermöglichen.

Zweckmäßigerweise wird zur Herstellung von gefärbtem oder pigmentiertem körnigem anorganischen Material in dieser Verwendung zunächst eine trockene Vormischung aus der Härterzusammensetzung und dem zu beschichtenden körnigen anorganischen Material herstellt, Farbstoff oder Pigment in dem Alkalisilikatbindemittel suspendiert und die Suspension anschließend mit der Vormischung aus der Härterzusammensetzung und dem körnigen anorganischen Material gemischt.

Die Erfindung umfasst weiterhin ein körniges anorganisches Material, wie Sand, Glas, Metall, Keramik, Granulat oder Split, welches auf der Oberfläche einen mittels einer erfindungsgemäßen Kombination aus einem Alkalisilikatbindemittel und einer Härterzusammensetzung angehefteten Farbstoff oder angeheftetes Pigment aufweist.

Weitere Vorteile, Merkmale und Ausgestaltungsmöglichkeiten der Erfindung werden nun anhand von Beispielen weiter erläutert.

### Beispiele

### Beispiel 1: Bindung von Rotpigment (Eisenoxidrot) auf Quarzsand

| **Bestandteil** | **Anteil** | **Zusammensetzung** |
|---|---|---|
| | **[Gew.-%]** | **[Gew.-%]** |
| Härterzusammensetzung | 0,6% | 92,3% polymeres Aluminiumpolyphoshat [Al(PO₃)₃]ₙ 7,7% Borphosphat BPO₄ |
| Bindemittel (Alkalisilikat) | 8,1% | K5020T (Fa. Woellner) Kaliumsilikat, Konzentration 48%, Modul 2,54 |
| Pigment | 1,3% | Eisenoxidrot (Bayferrox^{®} 110) |
| Substrat | 90,0% | Quarzsand H33 |

Die Härterzusammensetzung wurde mit dem Quarzsand intensiv gemischt, und das Pigment wurde in der Wasserglaslösung suspendiert. Anschließend wurde die Suspension zu der trockenen Vormischung aus Sand und Härter zugegeben.
- Trocknen:: 10min bei 100°C
- Tempern:: 60min bei 120°C

### Beispiel 2: Bindung von Schwarzpigment (Eisenoxidschwarz) auf Quarzsand

| **Bestandteil** | **Anteil** | **Zusammensetzung** |
|---|---|---|
| | **[Gew.-%]** | **[Gew.-%]** |
| Härterzusammensetzung | 1,0 | 52% polymeres Aluminiumpolyphoshat [Al(PO₃]₃]ₙ |
| | | 10% Zinnchlorid SnCl₂ |
| | | 20% Zinkoxid ZnO |
| | | 10% Eisenphosphat FePO₄ |
| | | 8% Borphosphat BPO₄ |
| Bindemittel (Alkalisilikat) | 4,1 | HK35 (Fa. Woellner) Natriumsilikat, |
| | | Konzentration 33%, Modul 3,8 |
| Pigment | 0,4 | Eisenoxidschwarz (Bayferrox 340) |
| Substrat | 94,5 | Quarzsand H33 |

Die Härterzusammensetzung wurde mit dem Quarzsand intensiv gemischt, und das Pigment wurde in der Wasserglaslösung suspendiert. Anschließend wurde die Suspension zu der trockenen Vormischung aus Sand und Härter zugegeben.
- Trocknen:: 10min bei 100°C
- Tempern:: 15min bei 280°C

### Beispiel 3: Bindung von Rotpigment (Eisenoxidrot) auf Natron-Kalk-Silikat Glas

| **Bestandteil** | **Anteil** | **Zusammensetzung** |
|---|---|---|
| | **[Gew.-%]** | **[Gew.-%]** |
| Härterzusammensetzung | 4,8 | 90,9% polymeres Aluminiumpolyphoshat [Al(PO₃)₃]ₙ |
| | | 9,1% Borphosphat BPO₄ |
| Bindemittel (Alkalisilikat) | 86,6 | HK35 (Fa. Woellner) Natriumsilikat, |
| | | Konzentration 33%, Modul 3,8 |
| Pigment | 8,7 | Eisenoxidrot (Bayferrox^{®} 110) |
| Substrat | -- | Natron-Kalk-Silikat Glas |

Die Härterzusammensetzung wurde mit dem Quarzsand intensiv gemischt, und das Pigment wurde in der Wasserglaslösung suspendiert. Anschließend wurde die Suspension zu der trockenen Vormischung aus Sand und Härter zugegeben.
- Trocknen:: 30min bei 100°C
- Tempern:: 15min bei 280°C

### Beispiel 4: Bindung von Weißpigment (Titanoxid) auf Natron-Kalk-Silikat Glas

| **Bestandteile** | **Anteil** | **Zusammensetzung** |
|---|---|---|
| | **[Gew.%]** | **[Gew.-%]** |
| Härterzusammensetzung | 12,7 | 86,2% polymeres Aluminiumpolyphoshat [Al(PO₃)₃]ₙ |
| | | 13,8% Calciumsulfoaluminat |
| Bindemittel (Alkalisilikat) | 76,4 | Betol 50T (Fa. Woellner) Natriumsilikat, |
| | | Konzentration 44%, Modul 2,6 |
| Pigment | 10,9 | Weißpigment Titanoxid (TiO₂) |
| Substrat | -- | Natron-Kalk-Silikat Glas |

Die Härterzusammensetzung wurde mit dem Quarzsand intensiv gemischt, und das Pigment wurde in der Wasserglaslösung suspendiert. Anschließend wurde die Suspension zu der trockenen Vormischung aus Sand und Härter zugegeben.
- Trocknen:: 30min bei 100°C
- Tempern:: 45min bei 200°C

### Beispiel 5: Bindung von Grünpigment (Cr₂O₃) auf Schiefersplit

| **Bestandteil** | **Anteil** | **Zusammensetzung** |
|---|---|---|
| | **[Gew.-%]** | **[Gew.%]** |
| Härterzusammensetzung | 0,2 | 79,0% polymeres Aluminiumpolyphoshat [Al(PO₃)₃]ₙ |
| | | 8,0% Eisenpyrophosphat Fe₄(P₂O₇)₃ |
| | | 8,0% Zinkoxid |
| | | 5,0% Calciumsulfoaluminat |
| Bindemittel (Alkalisilikat) | 4,1 | Betol 35 (Fa. Woellner) Natriumsilikat, |
| | | Konzentration 35%, Modul 3,4 |
| Pigment | 0,5 | Grünpigment Chromoxid (Cr₂O₃) |
| Substrat | 95,2 | Schiefersplit |

Die Härterzusammensetzung wurde mit dem Quarzsand intensiv gemischt, und das Pigment wurde in der Wasserglaslösung suspendiert. Anschließend wurde die Suspension zu der trockenen Vormischung aus Sand und Härter zugegeben.
- Trocknen:: 10min bei 100°C
- Tempern:: 12min bei 300°C

## Patentansprüche

1. Härterzusammensetzung zur Steuerung des Abbindeverhaltens eines Alkalisilikatbindemittels, **dadurch gekennzeichnet, dass** die Härterzusammensetzung bezogen auf die trockenen Feststoffe wenigstens folgende Bestandteile umfasst:
a) 50 bis 97 Gew.-% polymeres Aluminiumphosphat [Al(PO₃)₃]ₙ mit einem Molverhältnis von P / Al von 2,0 bis 3,5,
b) 3 bis 50 Gew.-% wenigstens eines Zusatzstoffs, ausgewählt unter Zinkoxid (ZnO), Zinnoxid (SnO₂), Zinnchlorid (SnCl₂), Eisen (III)-orthophosphat (FePO₄), Eisen (III)-pyrophosphat (Fe₄(P₂O₇)₃), Borphosphat (BPO₄), Calciumsulfoaluminat ((Ca₆Al₂[(OH)₁₂₁(SO₄)₃]·26 H₂O), Calciumhydrogenphosphat (CaHPO₄), Calciumsilikat (Ca SiO₃) oder Gemischen der vorgenannten Zusatzstoffe.

2. Härterzusammensetzung nach einem der vorangegangenen Ansprüche, **dadurch gekennzeichnet, dass** der wenigstens eine Zusatzstoff in einer Menge von 3 bis 30 Gew.-% enthalten ist, vorzugsweise in einer Menge von 5 bis 20 Gew.%.

3. Härterzusammensetzung nach einem der vorangegangenen Ansprüche, **dadurch gekennzeichnet, dass** das polymere Aluminiumphosphat [Al(PO₃)₃]ₙ ein Molverhältnis von P / Al von 2,5 bis 3,4, vorzugsweise > 2,8 bis 3,2 aufweist.

4. Härterzusammensetzung nach einem der vorangegangenen Ansprüche, **dadurch gekennzeichnet, dass** die Zusammensetzung eine mittlere Korngröße d50 im Bereich von 1 bis 120 µm, vorzugsweise im Bereich von 10 bis 50 µm aufweist.

5. Kombination aus einem Alkalisilikatbindemittel und einer Härterzusammensetzung nach einem der vorangegangenen Ansprüche.

6. Kombination nach Anspruch 5, **dadurch gekennzeichnet, dass** das Alkalisilikatbindemittel Wasserglas ist, vorzugsweise Natriumwasserglas und/oder Kaliumwasserglas.

7. Kombination nach einem der Ansprüche 5 oder 6, **dadurch gekennzeichnet, dass** das Alkalisilikatbindemittel ein Modul (SiO₂ M₂O; M = Alkalimetall) von 1,5 bis 4,0, vorzugsweise von 1,8 bis 3,7, besonders bevorzugt von 2,0 bis 3,5 aufweist.

8. Kombination nach einem der Ansprüche 5 bis 7, **dadurch gekennzeichnet, dass** das Alkalisilikatbindemittel in flüssiger Form vorliegt und einen Feststoffgehalt im Bereich von 15 bis 65 Gew.-%, vorzugsweise im Bereich von 20 bis 60 Gew.-%, besonders bevorzugt im Bereich von 30 bis 50 Gew.-% aufweist.

9. Verwendung einer Kombination aus einem Alkalisilikatbindemittel und einer Härterzusammensetzung nach einem der Ansprüche 5 bis 8 zur Herstellung von gefärbtem oder pigmentiertem körnigem anorganischen Material, wie Sand, Glas, Keramik, Metal, Granulat oder Split, bei dem man Farbstoff oder Pigment mit der Kombination aus Alkalisilikatebindemittel und Härterzusammensetzung an die Oberfläche des körnigen anorganischen Materials bindet.

10. Verwendung nach Anspruch 9, **dadurch gekennzeichnet, dass** man zunächst eine trockene Vormischung aus der Härterzusammensetzung und dem körnigen anorganischen Material herstellt, Farbstoff oder Pigment in dem Alkalisilikatbindemittel suspendiert und die Suspension anschließend mit der Vormischung aus der Härterzusammensetzung und dem körnigen anorganischen Material mischt.

11. Körniges anorganisches Material, wie Sand, Glas, Keramik, Metal, Granulat oder Split, welches auf der Oberfläche einen mittels einer Kombination aus einem Alkalisilikatbindemittel und einer Härterzusammensetzung nach einem der Ansprüche 6 bis 9 angehefteten Farbstoff oder angeheftetes Pigment aufweist.

12. Verwendung einer Kombination nach einem der Ansprüche 5 bis 8 als Haftmittel oder Klebstoff zum Verbinden von Substratoberflächen miteinander oder zum Anbinden eines funktionalen Materials, wie ein Pigment, an die Oberfläche eines Substrats.
